# EUROPEAN PATENT APPLICATION

(11) **EP 4 397 218 A1**
(43) Date of publication of application: **10.07.2024**
(21) Application number: 22862770.9
(22) Date of filing: 01.06.2022
(51) Int. Cl.: A47J 27/08, A47J 37/06, A47J 36/06

(54) **COOKING UTENSIL**

(30) Priority: 31.08.2021 CN 202122089083 U
(71) Applicant: Zhejiang Shaoxing Supor Domestic Electrical Appliance Co., Ltd., Shaoxing, Zhejiang 312017 (CN)
(72) Inventor: LENG, Jiong, Shaoxing, Zhejiang 312017 (CN)
(74) Representative: LLR
(86) International application number: PCT/CN2022/096582
(87) International publication number: WO 2023/029628

(57) **Abstract**

The present invention provides a cooking utensil. It comprises a lid (10), a pot assembly (20), the lid (10) being provided on the pot assembly (20) and capable of opening and closing the pot assembly (20), the pot assembly (20) comprising an outer shell (21), a heat retention housing (22) and an inner pot (23) arranged in order from outside to inside, the inner port (23) having a cooking chamber for accommodating food; a heating assembly (30) comprising a heating element (31) and air circulation generator (32), a vent (221) being provided in a sidewall of the heat retention housing (22), the air circulation generator (32) being configured to allow air to flow through the vent (221) towards the heating element (31) and then into the cooking chamber of the inner pot (23); a heat circulation supportive structure (40) arranged between the sidewall of heat retention housing (22) and the sidewall of inner pot (23).

## Description

### Field of the Invention

The invention relates to the technical field of small household utensils and in particular, to a cooking utensil.

### Background of the Invention

A cooking utensil may provide a baking function with which food inside a cooking chamber can be baked or roasted, and a non-baking cooking function such as pressure cooking with which food inside the cooking chamber can be braised or stewed.

In exiting art, a cooking utensil comprises a lid and a pot assembly which comprises an inner pot, a heat retention housing, and an outer shell. A fan is disposed between the sidewall of the outer shell and the sidewall of the heat retention housing. Hot air generated by a heating element is blown into the cooking chamber of the inner pot by the fan.

When pressure cooking is performed, in order to facilitate the sealing between the lid and the top opening of the inner pot, the heat retention housing is used to position the inner pot. Thus, the distance between the sidewall of the heat retention housing and the sidewall of the inner pot is relatively small. However, when baking is performed, due to the small distance between the sidewall of the heat retention housing and the sidewall of the inner pot, it would be difficult for the fan to blow hot air in this space to the heating element. Therefore, it would be difficult to establish the circulation of hot air, so that the temperature rise in the cooking chamber is slow during baking.

### Summary of the Invention

The present invention provides a cooking utensil to solve the problem of slow temperature rise of the cooking chamber during baking in the prior art.

The invention provides a cooking utensil comprising: a lid; a pot assembly, the lid being provided on the pot assembly and capable of opening and closing the pot assembly; the pot assembly comprising an outer shell, a heat retention housing, and an inner pot arranged in order from outside to inside, the inner pot having a cooking chamber for accommodating food; a heating assembly including a heating element and an air circulation generator, a vent being provided in a sidewall of the heat retention housing, and the air circulation generator being configured to enable air to flow through the vent towards the heating element and then into the cooking chamber of the inner pot; a heat circulation supportive structure disposed between the sidewall of the heat retention housing and a sidewall of the inner pot.

The heat circulation supportive structure provided between the inner pot and the heat retention housing may be used to position the inner pot. Therefore, when the cooking utensil is not working in a baking mode, the inner pot would not shake thanks to the support of the heat circulation supportive structure, thereby ensuring a sealing fit of the lid with the top opening of the inner pot. Moreover, due to the presence of the heat circulation supportive structure, there is no longer need to reduce the distance between the sidewall of the inner pot and the sidewall of the heat retention housing to position the inner pot. In other words, the distance between the sidewall of the inner pot and the heat retention housing can be appropriately increased. When the cooking utensil is in a baking mode, more air can circulate through the space between the sidewall of the heat retention housing and the sidewall of the inner pot. Then, air is blown to the heating element and into the inner pot by the air circulation generator, thereby easily creating a circulation of hot air, which accelerates the temperature rise of the cooking chamber.

Further, the heat circulation supportive structure may comprise a positioning protrusion provided on the sidewall of heat retention housing. The positioning protrusion may also be provided on the inner pot, or on both the inner pot and the heat retention housing. However, being provided on the heat retention housing may facilitate the processing of the positioning protrusion, also at lower cost.

Further, the distance between the positioning protrusion and the sidewall of the inner pot is A1, wherein 1 mm < A1 < 2 mm. With A1 set within such range, the inner pot may be positioned by means of the positioning protrusion, so that the inner pot would not shake when it is located in the heat retention housing. If the distance between the positioning protrusion and the inner pot is less than 1 mm, it would not be convenient to remove the inner pot. In addition, the positioning protrusion and the inner pot may bump with each other, causing damage to the inner pot and/or the positioning protrusion. On the other hand, when the distance between the positioning protrusions and the inner pot is greater than 2 mm, the inner pot cannot be effectively positioned by the positioning protrusions and the inner pot is prone to shaking relative to the heat retention housing.

Further, the distance between the sidewall of the heat retention housing and the sidewall of the inner pot is A2, wherein 3 mm < A2 < 7 mm. With A2 set within such range, when the cooking utensil is in baking mode, it is easy for air to flow through the space between the heat retention housing and the inner pot. If A2 is less than 3 mm, it is difficult to create a circulation of hot air through the too small space between the heat retention housing and the inner pot, and the temperature rise of the cooking chamber would be slow. On the other hand, if the A2 is greater than 7 mm, the volume of the inner pot would be excessively reduced.

Further, the positioning protrusion may be a positioning rib attached to the heat retention housing. The positioning rib may be provided as an independent component so that it is flexible in use. Alternatively, the positioning protrusion may be integrally formed with the heat retention housing, which is simple to manufacture and less costly.

Further, the positioning protrusion has an elongated shape with its length direction parallel to the axis of heat retention housing. Thus, the positioning protrusion and the inner pot are in line contact so that the positioning is more robust and reliable.

Further, the heat circulation supportive structure may include a plurality of positioning protrusions arranged on the sidewall of heat retention housing at intervals along the circumferential direction of the heat retention housing. Therefore, support can be made more stable with the cooperation of the plurality of positioning protrusions.

Further, the heating element and the air circulation generator may be arranged inside the outer shell, the air circulation generator comprising a fan arranged at the vent. When the cooking utensil works in baking mode, the fan may quickly blow air flowing back through the vent towards the heating element. Then the air flown back is heated by the heating element and blown towards the cooking chamber to heat food in the inner pot.

Further, the lid may comprise a first lid and a second lid, which can be alternatively mounted on the pot assembly, the first lid being a baking lid. By providing interchangeable first lid and second lid, the cooking utensil can provide multiple functions, which improves its cost-efficiency and utility. When the cooking utensil works in baking mode, the first lid is placed over the pot assembly and food is baked or roasted.

Further, the second lid may comprise a lid body and a sealing ring for the pot opening, the sealing ring being provided on the lower edge of the lid body. When the cooking utensil is not in baking mode, since the sealing ring is provided on top of the inner pot, the cooking utensil can be used both as a non-pressure cooker such as an electric rice cooker, and as a pressure cooker such as an electric pressure cooker. In addition or alternatively, the second lid is a pressure lid. When the cooking utensil is not in the baking mode, the second lid is placed on top of the pot to perform pressure cooking of the food.

### Description of the Drawings

The accompanying figures, which form a part of the present application, are used to provide a further understanding of the invention. Illustrative embodiments of the invention and description thereof are provided to explain the invention and do not constitute an undue limitation of the invention.
Fig. 1 shows a cross-sectional view of a cooking utensil according to an embodiment of the invention in a baking mode;
Fig. 2 shows an enlarged partial view at A of Fig. 1;
Fig. 3 shows a cross-sectional view of the cooking utensil according to an embodiment of the invention in a non-baking mode;
Fig. 4 shows a schematic view of the heat retention housing of the cooking utensil according to an embodiment of the present invention;
Fig. 5 shows a schematic view of the inner pot of the cooking utensil according to an embodiment of the present invention.

The above-mentioned figures include the following reference numerals:
10: lid; 11: first lid; 12: second lid;
20: pot assembly; 21: outer shell; 22: heat retention housing; 221: vent; 23: inner pot;
30: heating assembly; 31: heating element; 32: air circulation generator; 321: fan;
40: heat circulation supportive structure; 41: positioning protrusion; 411: rib;
50: heating plate;
A1: distance between the positioning protrusion and the sidewall of the inner pot;
A2: distance between the sidewall of the heat retention housing and the sidewall of the inner pot.

### Detailed Description of the invention

The following will clearly and completely describe the technical solutions in the embodiments of the present invention with reference to the accompanying drawings of the embodiments of the present invention. Obviously, the described embodiments are only some, not all, embodiments of the present invention. The following description of at least one exemplary embodiment is merely illustrative in nature and in no way taken as limiting the invention, its application or uses. Based on the embodiments of the present invention, all other embodiments obtained by persons of ordinary skill in the art without creative efforts fall within the protection scope of the present invention.

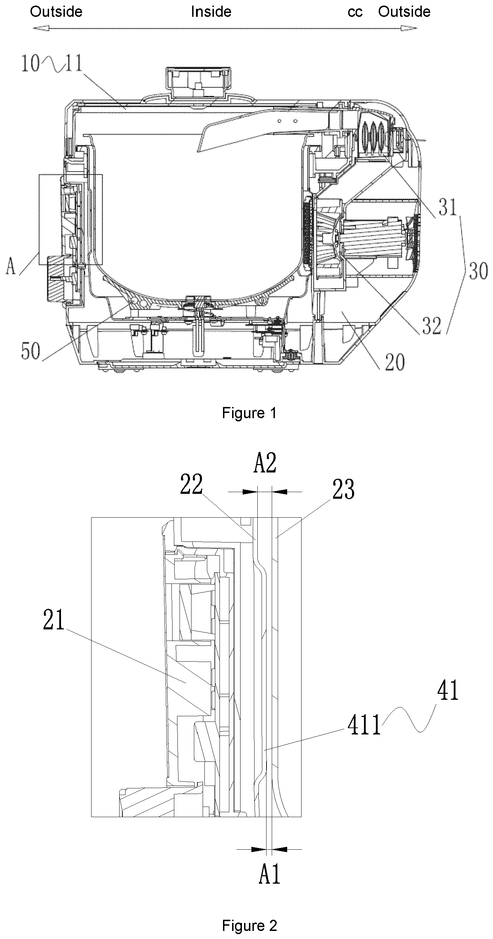

As shown in Figs. 1 to 5, an embodiment of the invention provides a cooking utensil, which comprises a lid 10, a pot assembly 20, a heating assembly 30 and a heat circulation supportive structure 40. The lid 10 is provided on the pot assembly 20 and capable of opening and closing the pot assembly 20. The pot assembly 20 comprises an outer shell 21, a heat retention housing 22, and an inner pot 23 arranged in order from outside to inside. The inner pot 23 has a cooking chamber for accommodating food. The heating assembly 30 comprises a heating element 31 and an air circulation generator 32. The sidewall of the heat retention housing 22 has a vent 221. The air circulation generator 32 is configured to allow air to flow through the vent 221 towards the heating element 31 and then into the cooking chamber of the inner pot 23. In this embodiment, the heat circulation supportive structure 40 is arranged between the sidewall of the heat retention housing 22 and the sidewall of the inner pot 23.

According to the present invention, the heat circulation supportive structure 40 provided between the sidewall of the inner pot 23 and the sidewall of the heat retention housing 22 may be used to position the inner pot 23. Therefore, when the cooking utensil is not working in a baking mode, the inner pot 23 would not shake thanks to the support of the heat circulation supportive structure 40, thereby ensuring a sealing fit between the lid 10 and the top opening of the inner pot 23. Moreover, due to the presence of the heat circulation supportive structure 40, there is no longer need to reduce the distance between the sidewall of the inner pot 23 and the sidewall of the heat retention housing 22 to position the inner pot 23. In other words, the distance between the sidewall of the inner pot 23 and the heat retention housing 22 can be appropriately increased. When the cooking utensil is in the baking mode, more air can circulate through the space between the sidewall of the heat retention housing 22 and the sidewall of the inner pot 23. Then, air is blown to the heating element 31 and into the inner pot 23 by the air circulation generator 32, thereby easily creating a circulation of hot air, which accelerates the temperature rise of the cooking chamber.

It is to be noted that in this embodiment, the sidewall of the heat retention housing 22 refers to vertically disposed outer wall of heat retention housing 22 in Figure 1.

In the present embodiment, when the cooking utensil is in the baking mode, the heating element 31 heats the air to hot air. The air circulation generator 32 is rotatably mounted within the hot air channel. The vent 221 of the heat retention housing 22 and the hot air outlet of the heating element 31 are both in communication with the hot air channel. The air circulation generator 32 blows air towards the heating element 31 and then blows hot air into the cooking chamber of the inner pot 23. Excess hot air overflowing from the top of the inner pot 23 re-enters the space between the inner pot 23 and the heat retention housing 22, and then re-enters the hot air passage through the vent 221 on the heat retention housing 22 and is blown by the air circulation generator 32 towards the heating element 31, thereby creating the circulation of hot air.

It should be noted that the lid 10 may be mounted to the pot assembly 20 in the following two ways: either the lid 10 is separately provided and can be placed on or removed from the pot assembly 20; or the lid 10 is hinged to the pot assembly 20 and can be turned relative to the pot assembly 20 to open or close it. In this embodiment, the lid 10 is separately provided.

It should be noted that the heat circulation supportive structure 40 comprises positioning protrusions 41, which can be disposed either on the inner pot 23, or on the heat retention housing 22, or else on both the inner pot 23 and the heat retention housing 22.

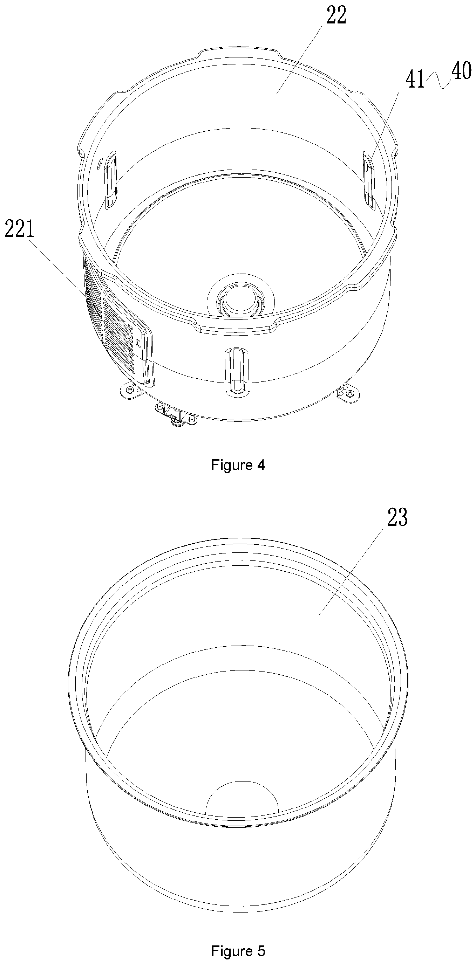

As shown in Figure 4, in the present embodiment, the heat circulation supportive structure 40 comprises positioning protrusions 41 provided on the sidewall of the heat retention housing 22. Compared to the other two possible arrangements, this arrangement facilitates the processing of the positioning protrusions 41 at lower cost.

In particular, the distance between the positioning protrusion 41 and the sidewall of the inner pot 23 A1 is ranged 1 mm < A1 < 2 mm. By setting A1 within such range, the inner pot 23 may be positioned by means of the positioning protrusions 41, so that the inner pot 23 would not shake when it is located in the heat retention housing 22. If the distance between the positioning protrusions 41 and the inner pot 23 is less than 1 mm, the inner pot 23 could not be easily removed, and the positioning protrusions 41 and the inner pot 23 may bump with each other, causing damage to either the inner pot 23 and/or the positioning protrusions 41. On the other hand, if the distance between the positioning protrusions 41 and the inner pot 23 is greater than 2 mm, the inner pot 23 cannot be effectively positioned by the positioning protrusions 41 and the inner pot 23 is prone to shaking relative to the heat retention housing 22. In this example implementation, A1 is 1.5 mm.

Alternatively, A1 may also be 1 mm, 1.1 mm, 1.2 mm, 1.3 mm, 1.4 mm, 1.6 mm, 1.7 mm, 1.8 mm, 1.9 mm, 2 mm, and any other value between 1 mm and 2 mm.

In particular, the distance between the sidewall of the heat retention housing 22 and the sidewall of the inner pot 23 A2 is ranged 3 mm < A2 < 7 mm. With A2 set within such range, when the cooking utensil is in the baking mode, it is easy for air to flow through the space between the heat retention housing 22 and the inner pot 23. If the distance between the heat retention housing 22 and the inner pot 23 is less than 3 mm, it would be difficult to create a circulation of hot air through the too small space between the heat retention housing 22 and the inner pot 23, and the temperature rise of the cooking chamber would be slow. On the other hand, if the distance between the heat retention housing 22 and the inner pot 23 is greater than 7 mm, the volume of the inner pot 23 would be excessively reduced. In this embodiment, A2 is 5 mm.

Alternatively, A2 may also be 3 mm, 4 mm, 6 mm, 7 mm, and any other value between 3 mm and 7 mm.

In this embodiment, the positioning protrusions 41 are integrally molded with the heat retention housing 22, which is simple to manufacture and less costly.

In other embodiments, the positioning protrusions 41 may also be provided as positioning ribs 411 attached to heat retention housing 22. The positioning ribs 411 may be independent components which are more flexible in use.

As shown in FIG. 4, the positioning protrusion 41 has an elongated shape with its length direction parallel to the axial direction of heat retention housing 22. With such arrangement, the positioning protrusions 41 and the inner pot 23 are in line contact so that the positioning is more robust and reliable.

As shown in Figure 4, the heat circulation supportive structure 40 comprises a plurality of positioning protrusions 41 arranged on the sidewall of the heat retention housing 22 at intervals along circumferential direction of the heat retention housing 22. Support can be more robust with the cooperation of the plurality of positioning protrusions 41.

In the present embodiment, the heat circulation supportive structure 40 comprises three positioning protrusions 41.

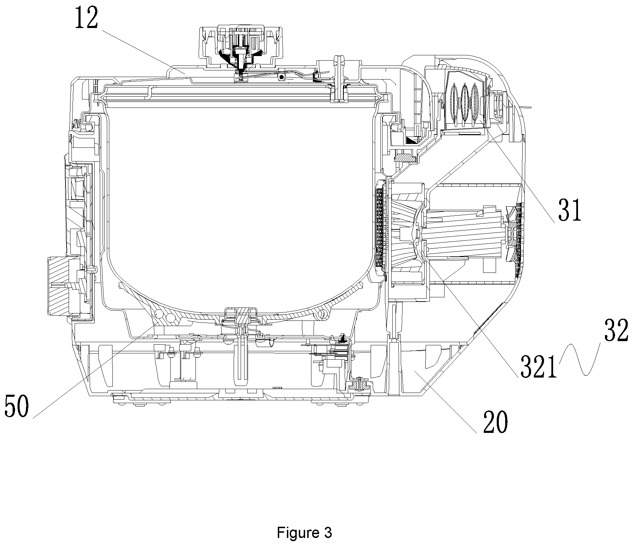

As shown in Fig. 3, the heating element 31 and the air circulation generator 32 are arranged within the outer shell. The air circulation generator 32 comprises a fan 321 arranged at the vent 221. When the cooking utensil is in the baking mode, the fan 321 can blow the air flowing back more quickly through the vent 221 towards the heating element 31. Then the air flown back is heated by the heating element 31 and blown towards the cooking chamber to heat the food inside the inner pot 23.

As shown in FIG. 3, the heating element 31 is arranged within the outer shell 21 and its level corresponds to an upper portion of the heat retention housing 22. Such arrangement shortens the flow path of the hot air, which allows heated air to directly and thus more quickly enter the inner pot, thereby reducing the heat loss of the hot air.

In the present embodiment, the heating element 31 is heating wire.

As shown in FIG. 1, the cooking utensil further comprises a heating plate 50 arranged below the inner pot 23. When the cooking utensil is not working in the baking mode, the heating plate 50 can heat the inner pot 23 to cook the food placed inside.

In particular, the lid 10 comprises a first lid 11 and a second lid 12, which can be alternatively mounted on the pot assembly 20. The first lid 11 is a baking lid. By providing interchangeable first lid 11 and second lid 12, the cooking utensil can provide multiple functions, which improves its cost-efficiency and utility. In this embodiment, when the cooking utensil is in the baking mode, the first lid 11 is placed on top of the pot assembly and food is baked or roasted.

The second lid 12 comprises a lid body and a sealing ring for the pot opening. The sealing ring is provided at the lower edge of the lid body. When the cooking utensil is not in the baking mode, since the sealing ring lid is provided over the inner pot 23, the cooking utensil can be used both as a non-pressure cooker such as an electric rice cooker, and as a pressure cooker such as an electric pressure cooker.

In the present embodiment, the second lid 12 is a pressure lid. When the cooking utensil is not in baking mode, the second lid 12 is placed on top of the pot assembly to preform pressure cooking of the food.

Therefore, the cooking utensil may be used as air-frying cooker or electric rice cooker or electric pressure cooker, or is a multi-functional cooker with baking or roasting, rice-cooking or dish-cooking functions.

It should be noted that the terminology used herein is for the purpose of describing specific embodiments only and is not intended to limit the invention. Unless the context clearly indicates otherwise, the singular forms are intended to include the plural forms as well. It is also to be understood that when the terms such as "comprise" and/or "comprising" are used in this specification, they intend to specify the presence of features, steps, operations, devices, components, and/or combinations thereof.

Unless specifically stated otherwise, the relative arrangements of components and steps, numerical expressions and numerical values set forth in these embodiments do not limit the scope of the invention. It should also be understood that for the convenience of description, dimensions of various parts illustrated in the figures are not necessarily drawn to actual scale. Techniques, methods, and devices known to those of ordinary skill in the relevant art may not be discussed in detail. But where appropriate, these techniques, methods and devices should be considered part of the specification. In all examples shown and discussed herein, any specific value should be construed as exemplary only and not limitative. Thus, other examples of embodiments may have different values. It should be noted that similar numerical references and letters represent the same or similar items in the figures. Therefore, once an item is defined in one figure, further discussion thereof is not required in a subsequent figure.

In the description of the present invention, it should be understood that the orientation or positional relationships indicated by wordings such as "front, back, upper, lower, left, right", "lateral, vertical, perpendicular, horizontal", "top, bottom" and the like are generally based on the orientation or positional relationships shown in the drawings, and are merely used the convenience and simplification of description of the invention. In the absence of a contrary description, these orientation wordings do not indicate or imply that the device or element referred to must have a particular orientation or be constructed and operated in a particular orientation, and therefore cannot be construed as limiting the protection scope of the invention. The wordings "inner, outer" refer to inner and outer with respect to the outline of the component itself.

For the convenience of description, spatially relative terms may be used herein, such as "on...", "over...", "on the upper surface of...", "above.." and the like, to describe the spatial positional relationship between one device or feature and other devices or features as illustrated in the figures. It should be understood that the spatially relative terms are intended to encompass different orientations of the device in use or operation in addition to the orientation depicted in the figures. For example, if the device in the figures is turned over, then devices described as "above" or "over" other devices or structures would then be positioned "below" or "under" the other devices or structures. The exemplary term "above" may encompass both "above" and "below". The device may also be otherwise differently positioned (rotated 90 degrees or at other orientations) and the spatially relative descriptions used herein will be interpreted accordingly.

Further, it is to be noted that the terms "first", "second" and the like are used to define parts only for the convenience of distinguishing the respective parts. Unless otherwise stated, the terms do not have a special meaning and thus cannot be understood as a limitation of the scope of protection of the invention.

The above description only presents preferred embodiments of the present invention, and is not intended to limit the invention. For those skilled in the art, the invention may have various modifications and variations. Any modifications, equivalents, improvements, etc., which are within the spirit and principles of the invention, are intended to be included within the scope of the invention.

## Claims

1. A cooking utensil **characterized in that** it comprises:
- a lid (10);
- a pot assembly (20), the lid (10) being provided on the pot assembly (20) and capable of opening and closing, the pot assembly (20) comprising an outer shell (21), a heat retention housing (22) and an inner pot (23) arranged in order from outside to inside, the inner port (23) having a cooking chamber for accommodating food;
- a heating assembly (30) comprising a heating element (31) and an air circulation generator (32), a vent (221) being provided in a sidewall of the heat retention housing (22), the air circulation generator (32) being configured to allow air to flow through the vent (221) towards the heating element (31) and then into the cooking chamber of the inner pot (23);
- a heat circulation supportive structure (40) arranged between the sidewall of heat retention housing (22) and a sidewall of inner pot (23).

2. The cooking utensil according to claim 1, wherein the heat circulation supportive structure (40) comprises a positioning protrusion (41) provided on the sidewall of the heat retention housing (22).

3. The cooking utensil according to claim 2, wherein the distance between the positioning protrusion (41) and the sidewall of the inner pot (23) is A1, 1 mm < A1 < 2 mm.

4. The cooking utensil according to claim 1, wherein the distance between the sidewall of the heat retention housing (22) and the sidewall of the inner pot (23) is A2, 3 mm < A2 < 7 mm.

5. The cooking utensil according to claim 2, wherein the positioning protrusion (41) is a positioning rib (411) attached to the heat retention housing (22); or, the positioning protrusion (41) is integrally formed with the heat retention housing (22).

6. The cooking utensil according to claim 2, wherein the positioning protrusion (41) has an elongated shape, with its length direction parallel to the axis of heat retention housing (22).

7. The cooking utensil according to claim 2, wherein the heat circulation supportive structure (40) comprises a plurality of positioning protrusions (41) provided on the sidewall of the heat retention housing (22) at intervals along the circumferential direction of the heat retention housing (22).

8. The cooking utensil according to claim 1, wherein the heating element (31) and the air circulation generator (32) are arranged inside the outer shell (21), the air circulation generator (32) comprising a fan (321) arranged at the vent (221).

9. The cooking utensil according to claim 1, wherein the lid (10) comprises a first lid (11) and a second lid (12), which can be alternatively mounted on the pot assembly (20), the first lid (11) being a baking lid.

10. The cooking utensil according to claim 9, wherein the second lid (12) comprises a lid body and a sealing ring for pot opening, the sealing ring being provided at a lower edge of the lid body; and/or the second lid (12) is a pressure lid.
